# DEMANDE DE BREVET EUROPEEN

(11) **EP 3 835 964 A1**
(43) Date de publication de la demande: **16.06.2021**
(21) Numéro de dépôt: 20205993.7
(22) Date de dépôt: 05.11.2020
(51) Int. Cl.: G06F 13/38

(54) **ARCHITECTURE ELECTRONIQUE MODULAIRE**

(30) Priorité: 10.12.2019 FR 1914023
(71) Demandeur: Commissariat à l'Energie Atomique et aux Energies Alternatives, 75015 Paris (FR)
(72) Inventeur: PHILIPPE, Jean-Marc, 91190 GIF-SUR-YVETTE (FR); SCHMIT, Renaud, 35400 SAINT MALO (FR)
(74) Mandataire: Marks & Clerk France

(57) **Abrégé**

L'invention concerne une architecture électronique comprenant au moins deux ensembles fonctionnels et au moins un module d'interconnexion (30) pour l'échange de signaux entre lesdits ensembles fonctionnels, un module d'interconnexion comportant :
- une carte de base (1) équipée d'un premier groupe de connecteurs dit connecteurs externes, et d'un deuxième groupe de connecteurs dit connecteurs internes routés auxdits connecteurs externes, les entrées et sorties desdits connecteurs externes étant aptes à échanger des signaux avec lesdits ensembles fonctionnels ;
- une carte de spécialisation (2), connectée à ladite carte de base via lesdits connecteurs internes, comportant au moins un composant fonctionnel (32, 33, 34, 35, 36), chaque composant réalisant un traitement sur tout ou partie des signaux transitant sur ladite carte de spécialisation.

## Description

La présente invention concerne une architecture électronique modulaire. Elle s'applique notamment pour la réalisation de systèmes électroniques complexes et évolutifs.

La conception de systèmes électroniques est un processus long et complexe car de nombreux facteurs sont à prendre en compte. Parmi ceux-ci, on peut notamment citer :
- les besoins en puissance de calcul et en ressources de mémorisation, que ce soit au niveau de la mémoire ou du stockage de masse ;
- la consommation électrique et sa gestion ;
- les besoins des interconnexions (bande passante, latence, ...) ;
- la gestion éventuelle des traductions entre différents protocoles, concernant les entrées et sorties par exemple ;
- les besoins non fonctionnels des applications exécutées sur le système tels que des aspects temps réel ;
- la sécurité ou la sûreté/fiabilité de fonctionnement ;
- les possibilités d'évolution ;

D'autres aspects tels que le coût, le temps de développement, l'encombrement ou le conditionnement thermique sont également à prendre en compte. Les besoins en calcul des applications modernes étant de plus en plus importants, les concepteurs doivent intégrer des ressources de calcul et de stockage parfois fortement hétérogènes afin de garder une consommation énergétique raisonnable ou encore pouvoir réaliser des traitements en temps réel. Interconnecter ces sous-systèmes hétérogènes de manière efficace, tout en permettant la transmission de propriétés ou d'informations nécessaires à la réalisation de la fonctionnalité complète (propriété temporelle par exemple) est un réel problème.

Ainsi, un problème technique à résoudre est notamment d'être capable d'offrir une architecture électronique et électrique apte à évoluer et permettant d'assurer l'exécution des fonctions actuelles et futures d'un système complexe en fournissant la puissance de calcul et les moyens d'interconnexion suffisants, et assurant des propriétés de sécurité, de sureté et de maîtrise du temps. Ces bonnes propriétés doivent être fournies avec une complexité et un environnement maîtrisables.

Les solutions de l'art antérieur sont insatisfaisantes en regard de ce problème technique. Plus particulièrement, elles ne permettent pas de satisfaire à tous les besoins précédemment évoqués. Elles sont généralement figées, avec des protocoles et interfaces dédiés.

Un but de l'invention est notamment de répondre au problème posé en répondant à l'ensemble des besoins exprimés. A cet effet, l'invention a pour objet une architecture électronique comprenant au moins deux ensembles fonctionnels et au moins un module d'interconnexion pour l'échange de signaux entre lesdits ensembles fonctionnels, ledit module d'interconnexion comportant au moins :
- une carte de base équipée d'un premier groupe de connecteurs dit connecteurs externes, et d'un deuxième groupe de connecteurs dit connecteurs internes routés auxdits connecteurs externes, les entrées et sorties desdits connecteurs externes étant aptes à échanger des signaux avec lesdits ensembles fonctionnels ;
- une carte de spécialisation, connectée à ladite carte de base via lesdits connecteurs internes, comportant au moins un composant fonctionnel, chaque composant réalisant un traitement sur tout ou partie des signaux transitant sur ladite carte de spécialisation.

Dans un mode de réalisation particulier, lesdits connecteurs internes sont des connecteurs à haute densité d'entrée et de sortie.

Un desdits ensembles fonctionnels est par exemple un ensemble composé de capteurs et d'interfaces aptes à échanger des signaux avec lesdits connecteurs externes dudit module d'interconnexion.

Un desdits ensembles fonctionnels est par exemple un ensemble composé d'actionneurs et d'interfaces aptes à échanger des signaux avec lesdits connecteurs externes dudit module d'interconnexion.

Ladite carte de spécialisation comporte par exemple des ressources de routage pour acheminer les signaux entre lesdits ensembles fonctionnels et à l'intérieur desdits ensembles fonctionnels. Un composant de ladite carte de spécialisation peut être un routeur haut débit.

Ladite carte de spécialisation comporte par exemple un ou plusieurs composants du type PHY permettant de spécialiser les entrées et les sorties desdits connecteurs externes en leur affectant des protocoles de transmission. La coordination entre les différents protocoles ainsi que la traduction des messages portés par les signaux est assurée par un composant de ladite carte de spécialisation faisant office de passerelle entre les différents protocoles.

Ladite carte de spécialisation comporte par exemple un composant ajoutant des fonctions de filtrage, de sécurité et/ou de fiabilité sur les messages portés par les signaux.

Ladite carte de spécialisation comporte par exemple un composant apte à réaliser des calculs sur les données portées par les signaux.

Ladite carte de spécialisation comporte par exemple une alimentation régulée apte à alimenter électriquement lesdits ensembles fonctionnels via des lignes dédiées passant par lesdits connecteurs internes et externes.

Dans un autre mode de réalisation possible, ladite carte de spécialisation comporte un composant contrôlant l'alimentation électrique desdits ensembles fonctionnels au moyens de signaux de contrôle portés par des lignes dédiées passant par lesdits connecteurs internes et externes.

Dans un mode de réalisation possible, ladite architecture comporte :
- un ensemble fonctionnel composé d'un ensemble de capteurs reliés à des cartes d'acquisition implémentant des fonctions de traitement des signaux captés, lesdites cartes étant connectées à des connecteurs externes de ladite carte de base ;
- un ensemble fonctionnel composé de cartes filles connectées à des connecteurs externes de ladite carte de base et supportant des ressources de calcul aptes à traiter les données issues desdites cartes d'acquisition via ladite carte de spécialisation.
Ladite carte de spécialisation comporte par exemple au moins un routeur haut débit apte à router les signaux issus d'un premier groupe desdits capteurs et un routeur bas débit apte à router les signaux issus d'un deuxième groupe desdits capteurs.

Ladite architecture comporte par exemple un deuxième module d'interconnexion connecté audit module d'interconnexion, ledit deuxième module d'interconnexion étant connecté à au moins une ressource de stockage de données et comportant un routeur haut débit, l'accès à ladite ressource de stockage se faisant via ce routeur haut débit implanté sur la carte de spécialisation dudit deuxième module de connexion. Une ressource d'accélération partagée est par exemple connectée audit autre deuxième module de connexion, les signaux partagés avec ladite ressource d'accélération étant routés via le routeur haut débit.

D'autres caractéristiques et avantages de l'invention apparaîtront à l'aide de la description qui suit et des figures qui représentent :
[Fig.1] la figure 1, une première partie d'un module d'interconnexion utilisé dans une architecture selon l'invention ;
[Fig.2] la figure 2, le module complet dans un exemple d'application ;
[Fig.3] la figure 3, une illustration des différents blocs fonctionnels possibles constituant la carte de spécialisation dudit module d'interconnexion ;
[Fig.4] la figure 4, un premier exemple d'architecture électronique selon l'invention ;
[Fig.5] la figure 5, un deuxième exemple d'architecture électronique selon l'invention ;
[Fig.6] la figure 6, un troisième exemple d'architecture électronique selon l'invention.

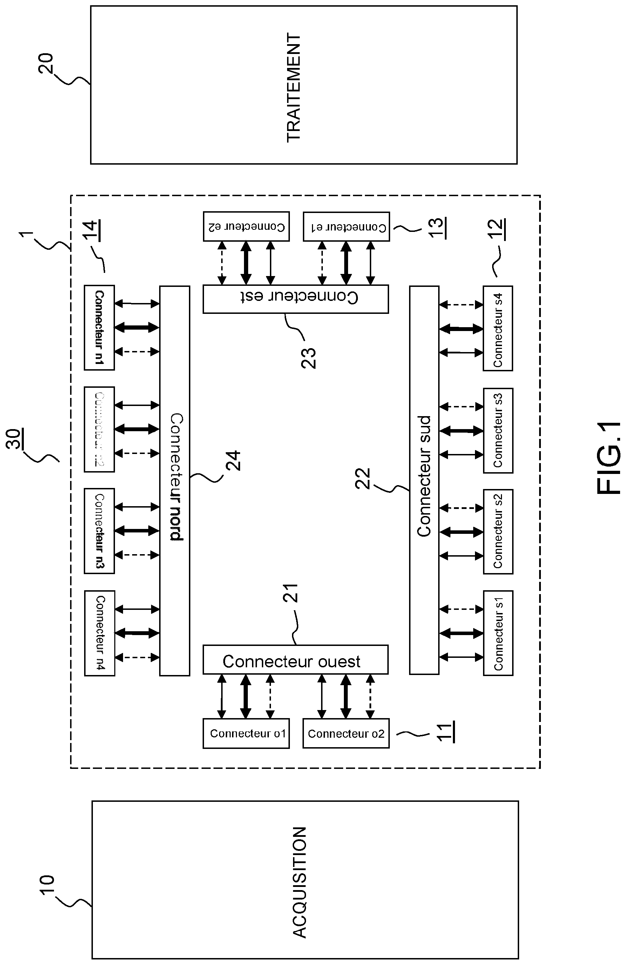

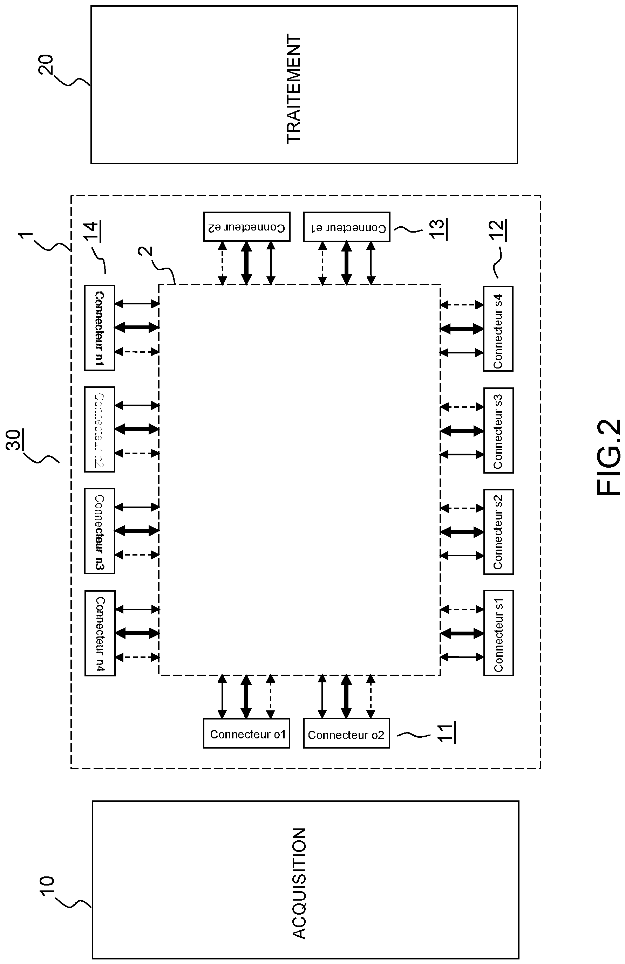

Les figures 1 et 2 illustrent le principe de l'invention. Pour illustrer ce principe on considère un système comportant un ensemble d'acquisition 10, composé par exemple de plusieurs cartes d'acquisition connectées elles-mêmes à des capteurs, et un ensemble de traitement 20, composé par exemple de plusieurs cartes de traitement. Pour permettre le fonctionnement du système, il est nécessaire d'interconnecter l'ensemble d'acquisition et l'ensemble de traitement. On peut bien sûr prévoir d'autres ensembles fonctionnels, par exemple un ensemble d'actionneurs et un ou plusieurs autres ensembles de traitement, plus généralement l'interconnexion de signaux d'entrées et/ou de sorties avec un ensemble de cartes électroniques formant un ensemble fonctionnel. A ce stade, pour illustrer le principe de l'invention, on s'appuie sur l'exemple simple de la figure 1 avec un ensemble d'acquisition 10 et un ensemble de traitement 20. L'interconnexion entre les ensembles 10, 20 est réalisée par un module d'interconnexion 30 comportant une carte de base 1 équipée d'un premier groupe de connecteurs 11, 12, 13, 14 et d'un deuxième groupe de connecteurs 21, 22, 23, 24. Dans l'exemple de la figure 1, les connecteurs du premier groupe sont disposés tout autour de la carte. L'ensemble d'acquisition est connecté à la carte de base via les connecteurs 11, orientés ouest dans la position arbitraire de la figure 1. A l'opposé, l'ensemble de traitement est connecté à la carte de base via les connecteurs 13 orientés est.

La figure 2 représente les mêmes éléments que ceux de la figure 1 avec en plus une deuxième carte 2 connectée à la carte de base par au moins un des connecteurs 21, 22, 23, 24 du deuxième groupe. Par ce montage, l'interconnexion entre l'ensemble d'acquisition et l'ensemble de traitement transite par la deuxième carte qu'on appellera par la suite carte de spécialisation, en rapport à la spécificité qu'elle apporte au système. En regard de l'exemple simple illustré par les figures 1 et 2, on peut énoncer ci-après certaines caractéristiques de l'invention

Une architecture selon l'invention comporte au moins un module électronique 30 selon la figure 1, mais plus généralement elle est composée d'une succession de modules électroniques 30, pouvant être spécialisés à la conception ou a posteriori.

Chaque module 30 est composé d'une carte de base 1 assurant les connexions électriques avec des composants du système final (traitement, interface, capteurs, actionneurs ...) via les capteurs 11, 12, 13, 14 du premier groupe. Les capteurs 21, 22, 23, 24 du deuxième groupe assurent l'interconnexion entre les composants du système via la carte de spécialisation 2. Les connecteurs du deuxième groupe, que l'on pourra appeler connecteurs internes, sont par exemple du type à haute densité car ils doivent être aptes à recueillir les connexions électriques de tous les connecteurs du premier groupe pour les envoyer vers la carte de spécialisation 2. Nous pourrons appeler ces connecteurs du premier groupe connecteurs externes en raison de leur destination.

La carte de base 1 exécute le routage des connecteurs externes vers les connecteurs internes. Son PCB ainsi que les circuits de routages et les connecteurs internes sont par exemple choisis aux normes les plus strictes (longueur des pistes, blindage, ...) par rapport aux signaux que l'on souhaite faire passer, par exemple des bus PCI Express. Ceci apporte la possibilité de spécialiser le système par assignation ou réassignation a posteriori des entrées/sorties des connecteurs, notamment par la deuxième carte électronique 2, la carte de spécialisation.

Chaque module comporte donc une deuxième électronique 2, reliée aux connecteurs internes. Cette deuxième carte 2 est plus complexe que la carte de base 1 car elle comporte des ressources lui permettant d'apporter au système des fonctions avancées comme notamment une interconnexion, du routage, des fonctions de sécurité et/ou de sûreté, de la traduction de protocoles avec une garantie de transmission des propriétés, en particulier des propriétés temporelles.

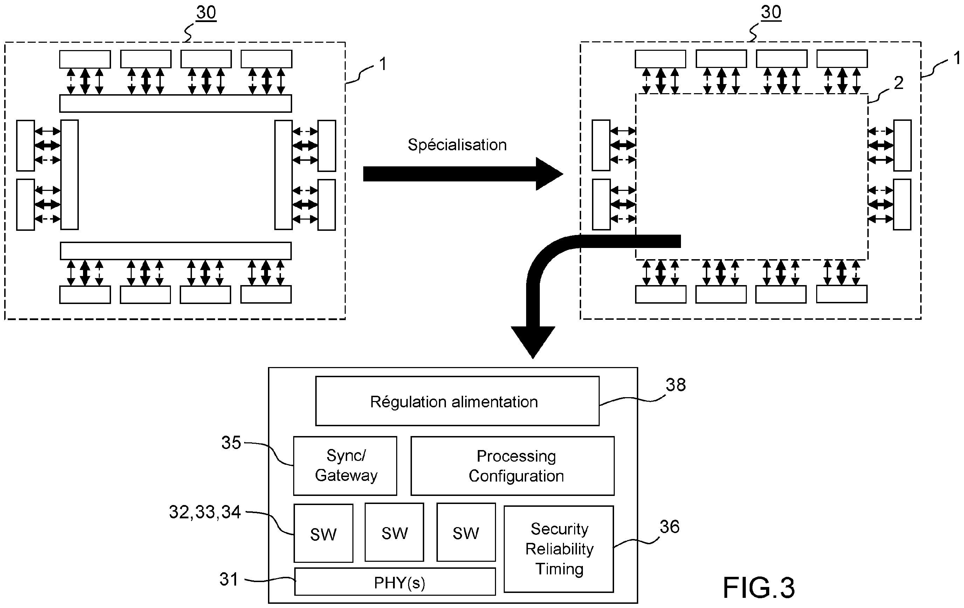

La figure 3 illustre les différents blocs ou composants fonctionnels pouvant composer la carte de spécialisation. Elle peut comporter un ou plusieurs de ces blocs fonctionnels, ou la totalité. La carte de spécialisation 2 est ainsi composée de différentes ressources dont certaines sont optionnelles. Des PHYs 31 permettent de spécialiser les entrées/sorties des connecteurs et d'implémenter la couche physique des protocoles de transmission de messages sur des distances longues (PCI Express, CAN, Ethernet, ...). Des ressources de routage réseaux 32, 33, 34 (commutateurs/hub, routeurs) permettent de réaliser un lien entre les différentes ressources du système. La coordination entre les différents protocoles des interconnexions ainsi que la traduction des messages sont par exemple assurées par un composant 35 faisant office de passerelle intelligente. Le fait que cette carte 2 voit passer tous les messages permet, grâce à un autre bloc fonctionnel 36, d'ajouter des fonctions de filtrage, de sécurité, de fiabilité ou encore de traduction de propriétés temporelles afin de maintenir une synchronisation dans le système complet. Une ressource de puissance de calcul 37 permet de réaliser des calculs dans le flux de données (afin de réaliser des mesures, du monitoring ou le calcul de données complexes à partir de données envoyées par les différentes ressources du système) ou encore de gérer les erreurs. D'autres fonctions avancées peuvent être utilisées par la carte de spécialisation 2. Plus généralement, les composants fonctionnels effectuent un traitement sur tout ou partie des signaux qui transitent sur la carte de spécialisation, ce traitement étant un routage, une fonction de sécurité ou toute autre fonction.

Parallèlement à l'interconnexion des signaux, on peut prévoir l'interconnexion des alimentations électriques. A cet effet, la carte de spécialisation 2 comporte par exemple un composant 38, par exemple programmable, permettant de réguler les alimentations électriques des composants du système qui lui sont rattachés via les lignes d'interconnexions de puissance transitant également vers les connecteurs internes et externes. Dans ce cas, le composant 38 peut être une alimentation régulée apte à alimenter électriquement les autres cartes ou blocs fonctionnels. Une autre option est que le composant programmable 38 ne gère que les signaux de contrôle des alimentations électriques disposées ailleurs (de façon centralisée ou réparties sur les différentes cartes ou blocs fonctionnels), l'alimentation elle-même étant apportée par un autre moyen. Les signaux de contrôle sont portés également par des lignes dédiées passant les connecteurs internes et externes. Ces signaux peuvent être notamment des signaux de contrôle de démarrage, de mise en veille, etc ... qui ne servent qu'à gérer la partie consommation énergétique de l'ensemble du système. Ce contrôle exercé par le composant 38 peut rester configurable en raison des possibilités de mise à jour du système a posteriori.

Dans un contexte de fortes contraintes liées au besoin en performances et en interconnexion des applications mises en œuvre, un lien dédié très haute vitesse entre les cartes d'interconnexion est par exemple mis en place.

On décrit par la suite plusieurs exemples de réalisation possible d'architecture selon le principe de l'invention précédemment exposé, ces exemples étant plus ou moins complexes.

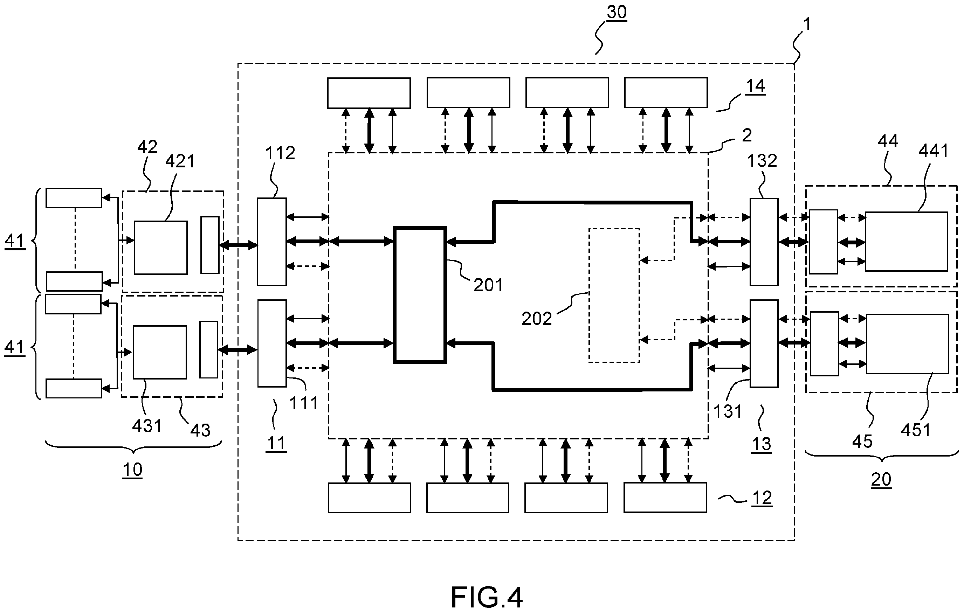

La figure 4 présente un système composé de capteurs et de cartes de calcul proches, utilisant un module d'interconnexion 30. Plus particulièrement, la figure 4 présente le schéma d'un système modulaire de perception de l'environnement. Le système comporte un ensemble de N capteurs 41. Les capteurs ayant besoin de connecteurs spécifiques sont reliés à des cartes d'acquisition spécifiques 42, 43, implémentant des fonctions de prétraitement 421, 431. Les cartes d'acquisition sont connectées au module d'interconnexion 30, plus particulièrement à la carte de base 1 du module, via les connecteurs externes 111, 112. De l'autre côté, deux cartes filles de calcul pur 44, 45 (comportant des fonctions de calcul 441, 451) sont également connectées à la carte de base via deux connecteurs 131, 132. Les cartes d'acquisition communiquent avec les cartes de calcul par le module d'interconnexion 30.

Dans cet exemple, la carte de spécialisation 2 comporte deux routeurs 201, 202 en rapport avec le type d'application. Les cartes d'acquisition envoient des données par flux sur un premier routeur 201, par exemple avec l'Ethernet. Les connexions à ce premier routeur sont représentées en traits continus gras. Les cartes filles de calcul reçoivent les données des capteurs via ce premier routeur 201. Parallèlement, elles ont besoin de partager des données à faible latence et à potentiel fort débit. Ainsi les connecteurs 131, 132 portent des liens câblés au deuxième routeur 202 lié à un protocole haut débit et faible latence, par exemple du PCI Express. Les connexions avec ce deuxième routeur sont représentées en trait discontinu. On voit ici que seule la carte d'interconnexion 2 spécialise le système. Cette carte 2, ainsi que les cartes filles 44, 45 implémentant le protocole PCI Express, permettent de réaliser un lien très haut débit et faible latence, à condition que les pistes du PCB de la carte de base 1 soient routées suivant les normes du PCI Express.

La structure physique de la carte de base 1 est par exemple standard, et comporte notamment des connecteurs externes 12, 14 non utilisés dans le cadre de l'application de la figure 4. Ces connecteurs sont bien sûr en réserve pour interconnecter d'autres cartes. De même, seuls les connecteurs internes nécessaires à l'application sont utilisés pour communiquer des signaux entre la carte de base et la carte de spécialisation.

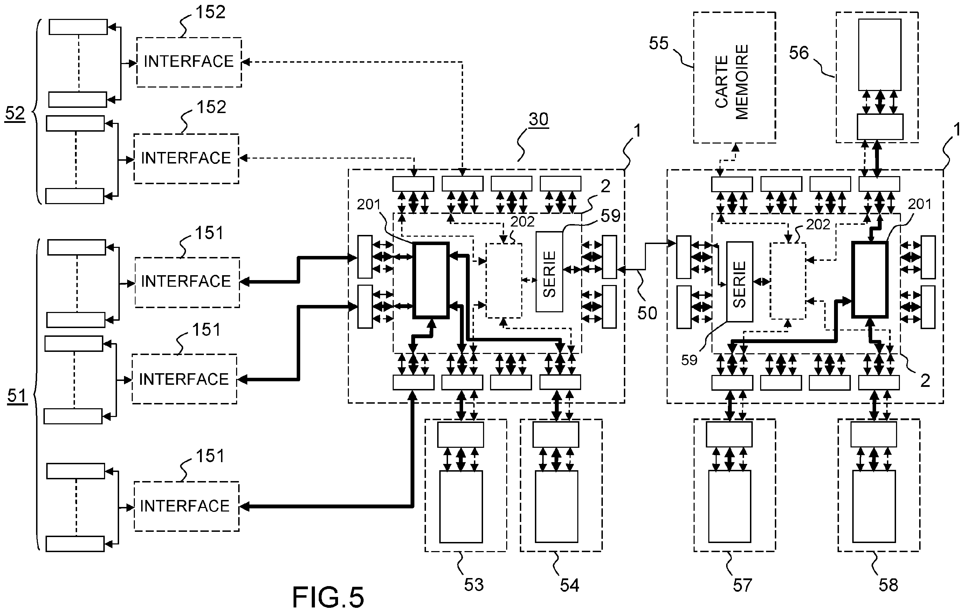

La figure 5 illustre un autre exemple d'architecture électronique selon l'invention. Dans cet exemple, le système comporte des capteurs à bas débit et des capteurs à haut débit, des caméras à haute définition sans compression par exemple. En général, un tel système nécessite un sous-système de stockage, ainsi que beaucoup de puissance de calcul. C'est notamment le cas d'un système ADAS dans un véhicule.

Alors que le système de la figure 4 comporte un seul module d'interconnexion, celui-ci en comporte deux, chacun avec une carte de base 1 et une carte de spécialisation 2. Chaque module comporte également sur la carte de spécialisation un premier routeur 201, pour les bas débits, et un second routeur 202 pour les hauts débits. Les codes de représentation des connexions (traits continus, traits discontinus) liées aux deux connecteurs sont les mêmes que pour la figure 4.

Un premier groupe de capteurs 51 sont reliés au routeur 201 « bas débit » du premier module d'interconnexion (module de gauche sur la figure) via des cartes d'interface 151, 152 et les connecteurs externes et internes de la carte de base 1. Un second groupe de capteurs 52 sont reliés au routeur 202 « haut » débit du premier module également via des cartes d'interface et les connecteurs externes et internes de la carte de base 1.

Un premier sous-système est formé par le premier module d'interconnexion et deux cartes filles 53, 54 qui sont comme dans l'exemple précédent dédiées à la puissance de calcul. A cet effet, chaque carte comporte au moins un connecteur et un ensemble dédié à la fonction de calcul propre à l'application. Les cartes filles 53, 54 échanges avec le module d'interconnexion, et plus particulièrement avec la carte de spécialisation via la carte de base 1, les échanges incluent notamment les données issues des capteurs 51, 52. Dans un exemple d'application, ce sous-système couplé aux capteurs exécute par exemple une partie des fonctions ADAS dans un véhicule.

Ce premier sous-système est complété par un deuxième sous-système exécutant l'autre partie des fonctions ADAS dans un véhicule. Ce deuxième sous-système utilise le deuxième module d'interconnexion 30 (module de droite sur la figure) connecté à une carte mémoire 55 et à trois carte filles de calcul 56, 57, 58. La carte mémoire peut être un disque dur. Les cartes filles communiquent chacune avec les deux routeurs 201, 202, bas débit et haut débit via les connecteurs externes et internes de la carte de base. L'accès à la carte mémoire se fait via le routeur haut débit. Ce deuxième sous-système complète le premier par un supplément de puissance de calcul et par une disponibilité de stockage apportée par la carte mémoire. En pratique, il peut être nécessaire de le placer à distance du premier sous-système. Dans ce cas, la liaison entre les deux sous-systèmes est réalisée par un câble, le protocole de transmission étant du type série à la base. A cet effet, chaque module d'interconnexion doit comporter une interface série 59. La carte de spécialisation 2 des modules est adaptée en conséquence. La carte de spécialisation telle que présentée pour l'application de la figure 4 est ainsi modifiée par l'ajout de cette interface série 59. On choisit par exemple une interface série à très haute vitesse et à faible latence permettant de faire passer différents protocoles sur des câbles ayant une longueur de plusieurs mètres, voire dizaines de mètres (par exemple en utilisant un ou plusieurs liens LVDS).

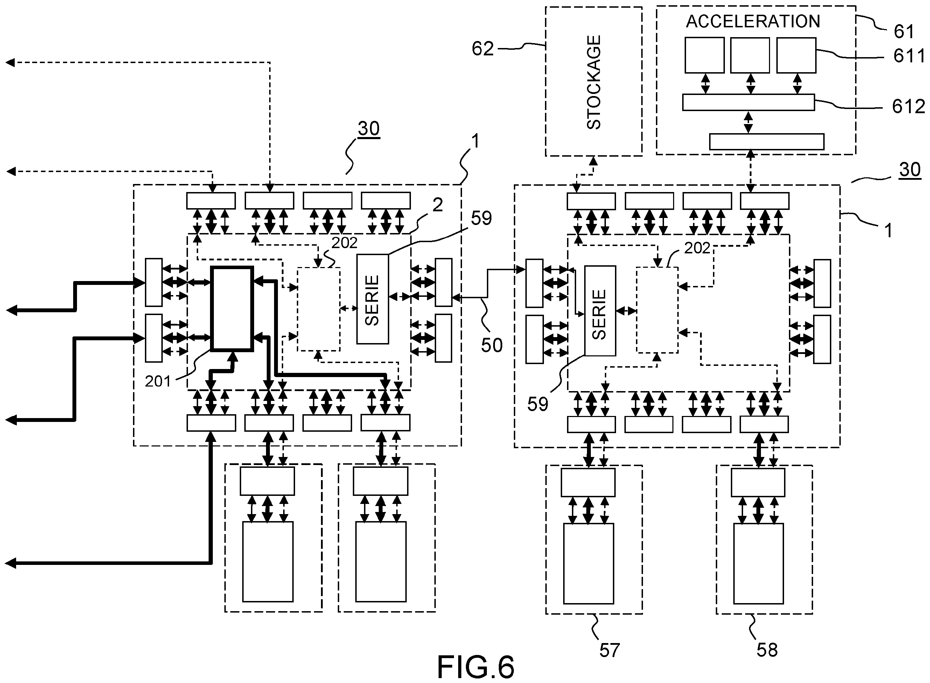

La figure 6 présente un troisième exemple d'architecture selon l'invention, nécessitant une accélération matérielle et un stockage partagé entre plusieurs applications. La partie d'acquisition de données, composée essentiellement de capteurs et d'interfaces adaptées n'est pas représentée. Elle est du type de celle de la figure 5. L'architecture comporte encore deux sous-système basés chacun sur un module d'interconnexion 30, mais le module du deuxième sous-système (à droite sur la figure) comporte un seul routeur, le routeur 202 haut débit. Les deux modules d'interconnexion comportent chacun une interface série 59 pour mettre en œuvre une liaison série entre les deux sous-systèmes situés à distance. Les cartes de spécialisation 2 spécialisent chacun des deux sous-systèmes, et plus particulièrement chacun des deux modules d'interconnexion. Le module de gauche comporte deux routeurs, bas débit et haut débit et une interface série, alors que le module de droite comporte un seul routeur, haut débit, et une interface série.

Le premier sous-système est identique au premier sous-système de la figure 5. Conformément à la spécificité exprimée précédemment, le deuxième sous-système comporte une carte 61, équipée d'un sous-système d'accélération partagé, et une carte de stockage haute vitesse 62. La carte de spécialisation comporte le routeur haut débit 202, du type PCI Express par exemple, avec des capacités de virtualisation de liens SRIOV, permettant d'interconnecter la carte de stockage haute vitesse 62 et la carte d'accélération 61. La carte de stockage peut être composée d'un ensemble de ressources de stockage comme par exemple des disques dur SSD. La carte d'accélération partagée peut être composée de cartes GPU 611 avec un commutateur 612 à haute vitesse, par exemple PCI Express. Ces cartes 61, 62 communiquent avec le premier sous-système et d'autres sous-systèmes éventuels via le module d'interconnexion. Deux carte filles 57, 58 dédiées à la puissance de calcul complètent le sous-système.

Les exemples d'architectures présentés aux figures 4, 5 et 6 utilisent une carte de spécialisation propre à certaines applications. Il est bien sûr possible de prévoir des cartes de spécialisation équipées d'autres fonctions, notamment parmi celles présentées en figure 3.

L'invention permet avantageusement de construire un système complexe hétérogène complet, gérant de multiples protocoles et pouvant être mis à jour par la suite, tout en gardant les propriétés du système original. La possibilité d'utiliser des protocoles différents permet d'adapter le système aux contraintes de son environnement, par exemple, séparer un calculateur trop volumineux en deux calculateurs plus petits placés en deux endroits différents reliés par un lien à très haute vitesse et faible latence, permettant par exemple d'utiliser des techniques logicielles de type mémoire partagée avec un faible impact. Ce type d'architecture est notamment illustré par les figures 5 et 6 où les deux sous-systèmes, d'encombrement réduit, peuvent composer un seul et même système de traitement puissant.

Le module d'interconnexion 30, est avantageusement évolutif. Il est basé sur une spécialisation de la carte de spécialisation 2. Il permet d'optimiser la répartition des ressources, par exemple en plaçant la complexité là où elle est utile. A cet effet, la carte de spécialisation peut être complexe et relier des composants ayant des besoins spécifiques, elle-même reliée à la carte de base, plus simple, reliant par exemple des capteurs via ses connecteurs externes, et tout en gardant des propriétés de sécurisation des données notamment. De même, cette possibilité de spécialisation permet de rendre un système embarqué scalable, par exemple en mettant à jour la carte de spécialisation par une version plus rapide et gérant un nombre de composants plus élevé, en fonction du besoin.

L'invention offre également l'avantage d'implanter des technologies de type « data center » dans de futurs systèmes embarqués (virtualisation d'interconnexions, connexions à très haute vitesse et faible latence, etc.), ce qui permet d'augmenter les capacités de ces systèmes, allant même jusqu'à permettre des aspects « disaggregated computing » avec séparation du calcul et du stockage grâce à une interconnexion haut débit et faible latence (ce qui permet une allocation dynamique des ressources, voire une réservation pour des applications critiques). Ceci permet donc d'optimiser de manière séparée ces différents paramètres (réalisation d'un système avec beaucoup de puissance de calcul et une faible mémoire ou inversement, la mise à jour étant possible) ou encore de placer ces éléments à différents endroits de l'environnement (dans un véhicule par exemple, en fonction des possibilités de ventilation, etc.).

L'aspect générique de l'invention permet également avantageusement de réaliser des systèmes cyberphysiques évolutifs, à base de briques pré-validées (cartes d'interface, de capteurs/actionneurs, de calcul, d'interconnexions, etc.). De plus, l'aspect générique des connecteurs et le routage global au pire cas de la carte de connexion permet la mise à jour des fonctionnalités de système global comme par exemple le remplacement d'une carte de calcul par une carte d'interface vers un second sous-système plus puissant.

L'invention offre également l'avantage d'utiliser les techniques classiques de sécurité, de robustesse ou encore de propagation de propriétés telles des aspects de synchronisation, etc. La possibilité de mettre à jour les systèmes de manière simple permet aussi de garder une maîtrise des coûts en adaptant le système existant tout au long de sa vie, là où la mise à jour est pertinente.

L'invention permet également de simplifier la conception d'un système : la possibilité de rajouter des cartes d'extension ou des sous-systèmes entiers offre par exemple l'avantage d'ajouter des cartes d'introspection/debug dans le système, soit pour le stimuler, soit pour récupérer les données y transitant afin d'effectuer une analyse. De plus, la flexibilité des interconnexions permet d'utiliser tout ou une partie du système comme émulateur « hardware in the loop ».

L'invention permet la conception de systèmes potentiellement très simples, avec peu de ressources de calcul/stockage mais aussi la réalisation de systèmes très complexes, par exemple en rajoutant des technologies « data center » (ex. PCIe - RDMA/SRIOV, disaggregated computing, comme indiqué précédemment) ou encore un partage et/ou une mutualisation de ressources accélératrices et/ou de stockage (analogie avec des commutateurs à haute vitesse, par exemple du type PCI Express, dans systèmes « multi-GPUs » de type « deep learning ») ou encore des réseaux de « monitoring » ou de contrôle « out-of-band » non prévus au départ.

Enfin, la séparation des ressources d'interconnexion du reste du système permet avantageusement, a posteriori, le compartimentage physique des réseaux par l'intermédiaire de la carte de spécialisation. Par exemple, on peut couper un réseau du type Ethernet reliant l'extérieur du système à des cartes de calcul d'un réseau de type PCIe reliant des cartes de calcul internes de ce même système.

## Revendications

1. Architecture électronique comprenant au moins deux ensembles fonctionnels et au moins un module d'interconnexion (30) pour l'échange de signaux entre lesdits ensembles fonctionnels, **caractérisé en ce qu'**un module d'interconnexion comporte :
- une carte de base (1) équipée d'un premier groupe de connecteurs (11, 12, 13, 14) dit connecteurs externes, et d'un deuxième groupe de connecteurs (21, 22, 23, 24) dit connecteurs internes routés auxdits connecteurs externes, les entrées et sorties desdits connecteurs externes étant aptes à échanger des signaux avec lesdits ensembles fonctionnels ;
- une carte de spécialisation (2), connectée à ladite carte de base via lesdits connecteurs internes, comportant au moins un composant fonctionnel (32, 33, 34, 35, 36, 37), chaque composant réalisant un traitement sur tout ou partie des signaux transitant sur ladite carte de spécialisation,
et **en ce que** la carte de spécialisation (2) comprend en outre un composant (38) de contrôle configurable apte à contrôler les alimentations électriques des ensembles fonctionnels (10, 20).

2. Architecture électronique selon la revendication 1, **caractérisée en ce que** lesdits connecteurs internes sont des connecteurs à haute densité d'entrées et de sortie.

3. Architecture selon l'une quelconque des revendications précédentes, **caractérisée en ce qu'**un desdits ensembles fonctionnels est un ensemble (10) composé de capteurs (41, 51, 52) et d'interfaces (42, 43, 151) aptes à échanger des signaux avec lesdits connecteurs externes dudit module d'interconnexion.

4. Architecture selon l'une quelconque des revendications précédentes, **caractérisée en ce qu'**un desdits ensembles fonctionnels est un ensemble composé d'actionneurs et d'interfaces aptes à échanger des signaux avec lesdits connecteurs externes dudit module d'interconnexion.

5. Architecture selon l'une quelconque des revendications précédentes, **caractérisée en ce que** ladite carte de spécialisation comporte des ressources de routage (201, 202) pour acheminer les signaux entre lesdits ensembles fonctionnels et à l'intérieur desdits ensembles fonctionnels.

6. Architecture selon la revendication 5, **caractérisée en ce qu'**un composant de ladite carte de spécialisation (2) est un routeur haut débit (202).

7. Architecture selon l'une quelconque des revendications précédentes, **caractérisée en ce que** ladite carte de spécialisation comporte un ou plusieurs composant du type PHY (31) permettant de spécialiser les entrées et sorties desdits connecteurs externes en leur affectant des protocoles de transmission.

8. Architecture selon la revendication 7, **caractérisée en ce que** la coordination entre les différents protocoles ainsi que la traduction des messages portés par les signaux est assurée par un composant (35) de ladite carte de spécialisation faisant office de passerelle intelligente entre les différents protocoles.

9. Architecture selon l'une quelconque des revendications précédentes, **caractérisée en ce que** ladite carte de spécialisation comporte un composant (36) ajoutant des fonctions de filtrage, de sécurité et/ou de fiabilité sur les messages portés par les signaux.

10. Architecture selon l'une quelconque des revendications précédentes, **caractérisée en ce que** ladite carte de spécialisation comporte un composant (37) apte à réaliser des calculs sur les données portées par les signaux.

11. Architecture selon l'une quelconque des revendications précédentes, **caractérisée en ce que** le composant (38) de contrôle configurable est apte à alimenter électriquement lesdits ensembles fonctionnels (10, 20) via des lignes dédiées passant par lesdits connecteurs internes et externes.

12. Architecture selon l'une quelconque des revendications 1 à 10, **caractérisée en ce que** ladite carte de spécialisation (2) comporte un composant contrôlant l'alimentation électrique desdits ensembles fonctionnels (10, 20) au moyen de signaux de contrôle portés par des lignes dédiées passant par lesdits connecteurs internes et externes.

13. Architecture selon l'une quelconque des revendications précédentes, **caractérisée en ce que** ladite architecture comporte au moins :
- un ensemble fonctionnel (10) composé d'un ensemble de capteurs (41) reliés à des cartes d'acquisition (42, 43) implémentant des fonctions de traitement des signaux captés, lesdites cartes étant connectées à des connecteurs externes (111, 112) de ladite carte de base (1) ;
- un ensemble fonctionnel (20) composé de cartes filles (44, 45) connectées à des connecteurs externes de ladite carte de base (1) et supportant des ressources de calcul aptes à traiter les données issues desdites cartes d'acquisition via ladite carte de spécialisation.

14. Architecture selon la revendication 13, **caractérisée en ce que** ladite carte de spécialisation comporte au moins un routeur haut débit (202) apte à router les signaux issus d'un premier groupe (51) desdits capteurs et un routeur bas débit (201) apte à router les signaux issus d'un deuxième groupe (52) desdits capteurs.

15. Architecture selon l'une quelconque des revendications 13 ou 14, **caractérisée en ce qu'**elle comporte un autre module d'interconnexion connecté audit module d'interconnexion, ledit autre module d'interconnexion étant connecté à au moins une ressource de stockage de données (55) et comportant un routeur haut débit (202), l'accès à ladite ressource de stockage se faisant via ce routeur haut débit implanté sur la carte de spécialisation dudit autre module de connexion.

16. Architecture selon la revendication 15, **caractérisée en ce qu'**une ressource d'accélération partagée (61) est connectée audit autre module de connexion, les signaux partagés avec ladite ressource d'accélération étant routés via le routeur haut débit (202).
